# FASCICULE DE BREVET EUROPEEN

(11) **EP 0 844 719 B1**
(45) Date de publication et mention de la délivrance du brevet: **10.04.2002**
(21) Numéro de dépôt: 97402814.4
(22) Date de dépôt: 24.11.1997
(51) Int. Cl.: H02G 15/18, H02G 15/192, H02G 15/10

(54) **Dispositif de protection de raccordement de câbles**
Vorrichtung zum Schutz von Kabelverbindungen
Device for protecting cablejunctions

(30) Priorité: 25.11.1996 FR 9614394
(43) Date de publication de la demande: 27.05.1998
(73) Titulaire: CABLES PIRELLI, F-94417 Saint Maurice (FR)
(72) Inventeur: Claverie, Béatrice, 77186 Noisiel (FR)
(74) Mandataire: Lhuillier, René

(56) Documents cités:
- EP-A- 0 695 014
- DE-A- 3 327 821
- DE-A- 4 240 171
- FR-A- 2 388 432
- US-A- 2 191 544
- US-A- 3 141 060
- US-A- 3 209 061
- US-A- 4 029 895

## Description

La présente invention concerne un dispositif de raccordement de câbles. Elle s'applique en particulier aux raccordements souterrains de câbles électriques et de câbles optiques, pour les réseaux de distribution d'énergie ou pour les réseaux de transmissions de signaux.

On connaît par le DE 3327821 un dispositif de protection de raccordement d'extrémités de câbles comportant un support rigide relié mécaniquement à chacun des câbles, avec une enveloppe souple s'enroulant autour des extrémités de câbles et un joint d'étanchéité.

D'autres dispositifs de raccordement actuellement connus comportent un boîtier rigide en deux demi-coquilles aux extrémités duquel sont prévus des ouvertures. Dans ces ouvertures sont positionnés les câbles à raccorder. Ces dispositifs présentent de nombreux défauts : d'une part, leur rigidité crée des contraintes lorsque, par exemple sous l'effet de la souplesse ou de la déformation d'un terrain, les câbles sont décalés latéralement ou perdent leur coaxialité.

De plus, ces dispositifs prennent, au transport et au stockage, un volume important et nécessitent l'utilisation de matières périssables. Enfin, leur utilisation n'est pas toujours aisée dans la mesure où la rigidité de la première partie du boîtier gêne l'utilisateur pour le raccordement des câbles.

L'invention entend remédier à ces inconvénients.

A cet effet, elle présente un dispositif de protection de raccordement de câbles comportant un support rigide relié mécaniquement à chacun des câbles, une enveloppe souple s'enroulant autour des extrémités de câbles et un joint d'étanchéité sur lequel s'applique l'enveloppe souple, et adapté à rendre étanche le dispositif autour des extrémités de câbles, dispositif caractérisé en ce que le support rigide est une coque centrée sur la zone de raccordement des câbles et qui couvre moins d'un tiers de chacun des angles solides entourant chacune des extrémités de câbles et en ce que ladite coque porte des moyens de liaison adaptés chacun à être reliés rapidement à une partie prédéterminée de l'enveloppe souple.

Grâce à ces dispositions, le dispositif selon l'invention suit les déformations engendrées ou subies par les câbles sans altération de ses performances, et l'accès aux dites extrémités de câbles est facilité.

Selon d'autres caractéristiques particulières, le support rigide possède une résistance à la flexion sensiblement égale à celle de chaque groupe de câbles raccordés présents à une extrémité du dispositif. Grâce à ces dispositions, la résistance à la flexion possède, au raccordement des câbles, une valeur sensiblement égale à celle des câbles et aucune rigidité ne perturbe les déformations souterraines des câbles.

Selon d'autres caractéristiques particulières, le joint d'étanchéité est constitué d'une matière pâteuse protégée, avant l'étanchéification du dispositif, par un film amovible. Grâce à ces dispositions, le film amovible protège, jusqu'au moment de la fermeture du dispositif, d'une part la matière pâteuse et d'autre part les pièces et utilisateurs qui pourraient entrer en contact avec elle.

Selon d'autres caractéristiques, une extrémité du support rigide est reliée à au moins deux câbles, cette extrémité comportant une entretoise positionnée entre lesdits câbles.

Grâce à ces dispositions, l'étanchéité est assurée quel que soit le nombre de câbles raccordés.

Selon d'autres caractéristiques particulières, le joint d'étanchéité s'étend le long de l'enveloppe souple entre deux extrémités du support qui sont chacune reliées à au moins un câble.

Grâce à ces dispositions, l'étanchéité est assurée en enroulant l'enveloppe souple dans un mouvement circulaire autour de l'axe des câbles raccordés et autour du support rigide.

Selon d'autres caractéristiques particulières, le joint d'étanchéité comporte un mastic butyle. Grâce à ces dispositions, l'étanchéité est particulièrement bien assurée.

Selon d'autres caractéristiques particulières, l'enveloppe souple comporte un tissu métallique. Ce tissu métallique peut être mécaniquement solidaire du reste de l'enveloppe souple, ou non. Ainsi, le dispositif peut résister aux coups de pioche. Préférentiellement, ledit tissu métallique est relié à la terre. Ainsi, si un contact électrique se créait entre l'un des câbles raccordés et le tissu métallique, celui-ci, relié à la terre, ne présenterait aucun danger électrique. On note ici que le tissu métallique peut, selon les variantes, se trouver entre le support rigide et l'enveloppe souple, d'une part, ou autour de l'enveloppe souple, d'autre part. Dans ce dernier cas, le tissu métallique est surmoulé à l'enveloppe souple de manière à posséder la même forme que cette dernière.

Selon d'autres caractéristiques particulières, le support rigide porte des moyens de liaison adaptés chacun à être relié rigidement à une partie prédéterminée de l'enveloppe souple. Grâce à ces dispositions, l'enveloppe souple est suffisamment tendue entre ces parties prédéterminées, qui sont adaptées à être maintenues rigidement, pour éviter un pli qui romprait l'étanchéité.

Enfin, selon d'autres caractéristiques particulières, le support rigide est constitué d'une matière thermoplastique. Grâce à ces dispositions, sa fabrication est particulièrement aisée.

D'autres avantages, buts de l'invention ressortiront de la description qui va suivre, faite en regard des dessins annexés dans lesquels :
- la figure 1 représente un dispositif de raccordement nodal selon la présente invention, adapté au raccordement d'un câble dérivé sur un câble principal;
- la figure 2 représente une vue en coupe longitudinale du dispositif présenté en figure 1 ;
- la figure 3 représente, en élévation longitudinale, la fixation d'un support rigide sur des câbles raccordés entre eux, dans un dispositif tel que présenté en figure 1 en cours d'installation ;
- la figure 4 représente, en coupe transversale, la fixation d'un support rigide sur des câbles raccordés entre eux, dans un dispositif tel que présenté en figure 1 en cours d'installation ;
- la figure 5 représente la fin de l'enroulement d'une enveloppe souple sur le support rigide, dans un dispositif tel que présenté en figure 1 en cours d'installation ;
- la figure 6 représente le début d'une phase d'étanchéification d'un dispositif tel que présenté en figure 1 en cours d'installation ;
- la figure 7 représente un instant dans la phase d'étanchéification d'un dispositif tel que présenté en figure 1 en cours d'installation ;
- la figure 8 représente un encliquetage de l'enveloppe souple après étanchéification dans un dispositif tel que présenté en figure 1 en cours d'installation ;
- la figure 9 représente une mise en place de colliers dans un dispositif tel que présenté en figure 1 en cours d'installation ;
- la figure 10 représente un dispositif de raccordement de branchement selon la présente invention, adapté au raccordement d'un ou de deux câbles dérivés sur un câble principal ;
- la figure 11 représente une vue en coupe longitudinale du dispositif présenté en figure 10 ;
- la figure 12 représente une vue en coupe transversale du dispositif présenté en figure 10.

Les modes de réalisation du dispositif de l'invention présentés ici sont par exemple destinés aux câbles en aluminium pour le transport d'électricité à basse tension, à moins de 1 kV. Les surfaces des sections des câbles adaptés à être raccordés grâce à ces dispositifs, vont de 95 mm2 à 240 mm2.

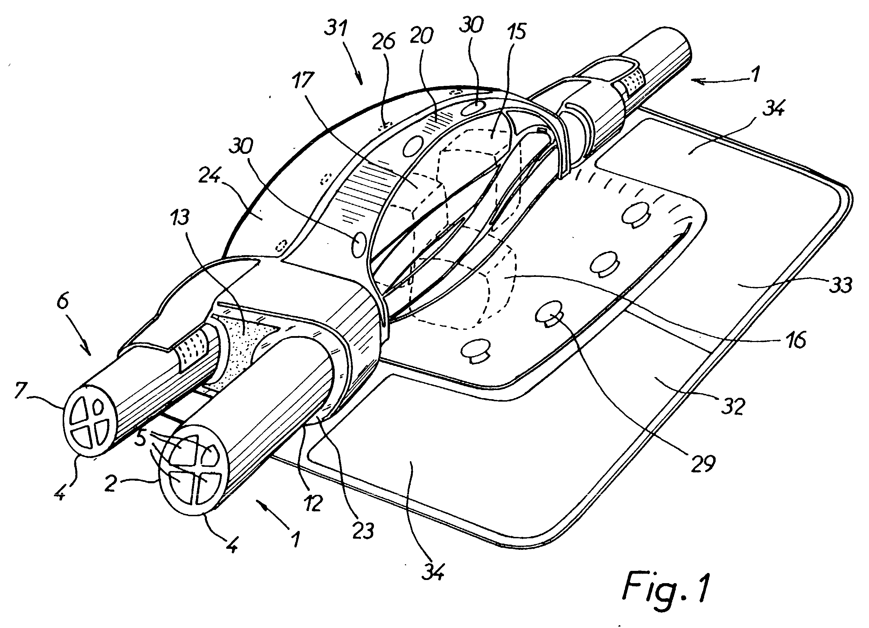

Dans la figure 1, est tout d'abord représenté un câble principal 1 destiné à être raccordé électriquement à un câble dérivé 6. Le câble principal 1 comporte, sur toute sa longueur, une gaine extérieure 2 qui isole électriquement le câble, un feuillard en acier 4 qui entoure quatre conducteurs 5 eux mêmes composés d'une enveloppe isolante qui entoure un noyau en métal conducteur.

Le câble "dérivé" ou "raccordé" 6 comporte, sur toute sa longueur, une gaine extérieure 7 qui l'isole électriquement, un feuillard en acier 4 qui entoure quatre conducteurs 8 identiques aux conducteurs 5.

Entre les câbles 1 et 6, une étanchéité est réalisée en positionnant d'abord deux tours de mastic butyle 12 sur chacun des câbles, en positionnant une entretoise 13 entre les câbles 1 et 6 et deux tours supplémentaires de mastic 23 sont positionnés sur les câbles 1 et 6 et sur l'entretoise 13.

Des connecteurs de serrage 15, 16, 17, de type connu et un connecteur 18 pour le neutre (non représentés en figure 1) effectuent les connections électriques des conducteurs correspondant des câbles 1 et 6.

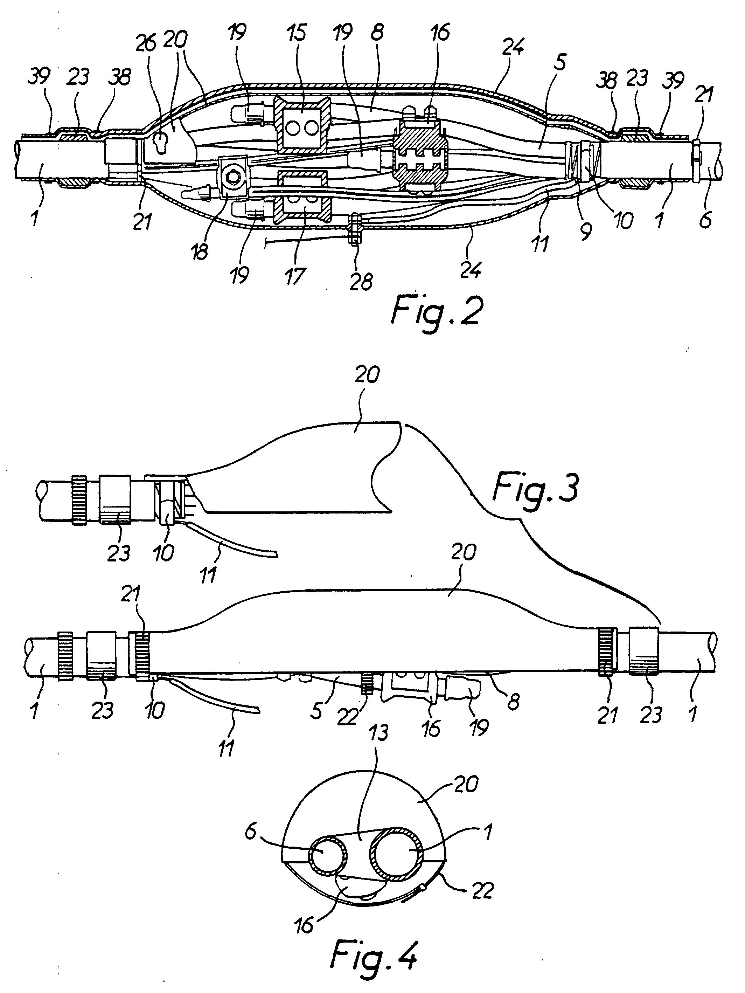

Selon une première caractéristique de la présente invention, une coque ou support rigide 20 est placée sur les câbles et centrée sur la zone de raccordement. Ce support rigide possède selon une caractéristique avantageuse de l'invention, une résistance aux déformations similaire à celle du câble principal 1. Pour positionner la coque rigide 20 sur les câbles 1 et 6, on ouvre la coque, on positionne ses extrémités sur les zones de raccordement et la coque tient en place grâce à son élasticité. Deux colliers de fixation 21 relient le support 20 aux câbles présents à une extrémité ou à l'autre de la connexion. De plus, un collier de fixation central 22 (figure 4) enserre les câbles 1 et 6 et les relie au support 20

Selon une caractéristique principale de l'invention, une enveloppe souple 24 est accrochée sur le support rigide par le passage de boutons 25 à travers une boutonnière 26 de l'enveloppe 24. Ils définissent ainsi une partie 31 de l'enveloppe, partie posée la première. Après enroulement de l'enveloppe 24, des boutons 29 qui la garnissent intérieurement sont passés à travers une boutonnière 30 du support rigide 20.

Des bandes de protection de mastic 32 et 33 protègent une pellicule de mastic qui adhère à l'enveloppe souple 24. Leur partie centrale est destinée à être appliquée sur la partie de l'enveloppe 31 posée la première. Les parties latérales 34 des bandes de protection sont placées sur les câbles 1 et 6, et sur l'intercalaire 13, au contact des tours de mastic 23.

Selon une variante préférentielle (non représentée), la pellicule de mastic est positionnée sur la face externe de la partie de l'enveloppe 31 posée la première.

En figure 2, sont représentés les câbles 1 et 6, les conducteurs 5 et 8, une prise de mise à la terre 9 placée sur le feuillard métallique du câble principal 1. Un ressort 10 fait un tour sur ce feuillard sans entourer des fils d'une câblette 11 puis aux tours suivant, le ressort 10 entoure la câblette 11 dont les fils conducteurs sont épanouis en éventail sur le premier tour du ressort 10, par exemple. Selon une variante (non représentée) la câblette 11 est solidaire d'un feuillard à glisser sur le ressort.

La câblette 11 est ensuite reliée à l'enveloppe en un point de mise à la terre 28.

Les connecteurs de serrage 15, 16 et 17, séparés le long de l'axe des câbles 1 et 6, pour éviter des surépaisseurs locales, et un connecteur de neutre 18, relient les conducteurs correspondants des deux câbles 1 et 6. Des capuchons d'étanchéité 19, constitués d'une gaine en PVC sont placés en extrémité des conducteurs. Le support rigide 20 est tenu aux câbles par les deux colliers 21 de fixation et par le collier 22 de fixation central (figure 4). Deux tours de mastic 23 entourent les câbles et l'entretoise 13. L'enveloppe souple 24 comporte un tissu interne métallique 27 (non représenté) et un point de mise à la terre 28 par lequel ce tissu conducteur est relié électriquement à la terre. Enfin, les colliers en métal inoxydable 38 et 39 sont positionnés sur le creux de l'enveloppe et au bord de l'enveloppe dans les gorges de l'enveloppe prévues à cet effet et entourent le mastic 23.

En figures 3 et 4, on observe le support rigide 20, le ressort 10, la câblette 11, l'intercalaire 13, un connecteur 16, un capuchon 19, les colliers de fixation sur câbles 21, le collier de fixation central 22 qui enserrent les conducteurs 5 et 8 vers le support 20 et les deux tours de mastic 23.

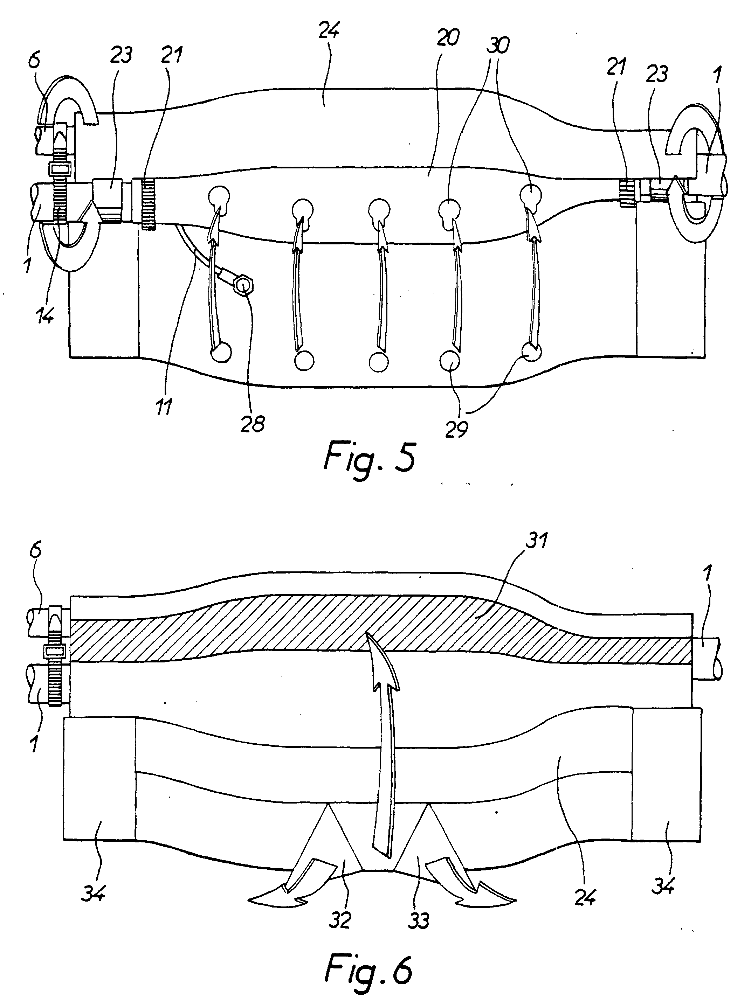

La figure 5 représente la fin de l'enroulement de l'enveloppe souple 24 autour du support 20 et des câbles 1 et 6. Deux flèches positionnées à droite et à gauche de la figure 5 et cinq flèches allant de bas en haut de la figure, permettent de visualiser le mouvement de l'enveloppe. On observe en particulier, les câbles 1 et 6, la câblette 11, une bride 14 qui maintient les câbles 1 et 6 autour de l'entretoise 13 pour exercer une pression modérée mais suffisante des câbles sur l'entretoise 13 et sur le mastic, pour assurer l'étanchéité, le support rigide 20, les colliers de fixation sur câbles 21, les deux tours de mastic 23 sur câbles et intercalaires, l'enveloppe souple 24 qui porte le point de mise à la terre 28, les boutons d'ancrage 29 qui sont insérés dans les boutonnières 30 du support rigide 20 par le mouvement représenté par les flèches.

Le positionnement des boutons dans les boutonnières permet d'assurer une tension sur la surface de l'enveloppe souple dans le sens longitudinal, c'est-à-dire qu'au bord de l'enveloppe souple le plus parallèle à l'axe des conducteurs 5 et 8, aucun pli ne peut se former.

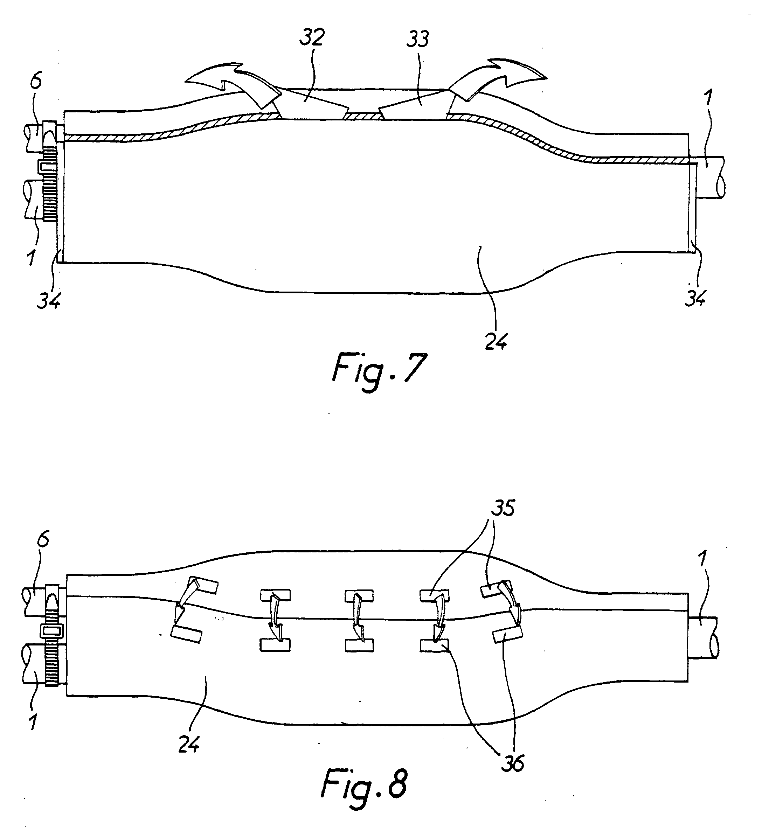

En figures 6 et 7, on retrouve des éléments de la figure 5, la partie 31 de l'enveloppe posée la première ayant été nettoyée pour un meilleur accrochage du mastic butyle protégé par les bandes de protection de mastic 32 et 33. Pour appliquer ce mastic, au-delà des deux boutonnières présentées ci-dessus, on retire en premier les extrémités des bandes de protection de mastic 32 et 33 (selon les flèches représentées en figure 6) et on applique la partie du mastic ainsi découverte sur le centre de la partie nettoyée. Ensuite, progressivement, on retire les bandes en appliquant progressivement l'enveloppe sur la partie nettoyée (figure 7). Enfin, on retire les bandes de protection latérales 34 et on place les bords de l'enveloppe sur les câbles et intercalaires.

On rappelle ici que selon une variante préférentielle (non représentée), la pellicule de mastic est positionnée sur la face externe de la partie de l'enveloppe 31 posée la première.

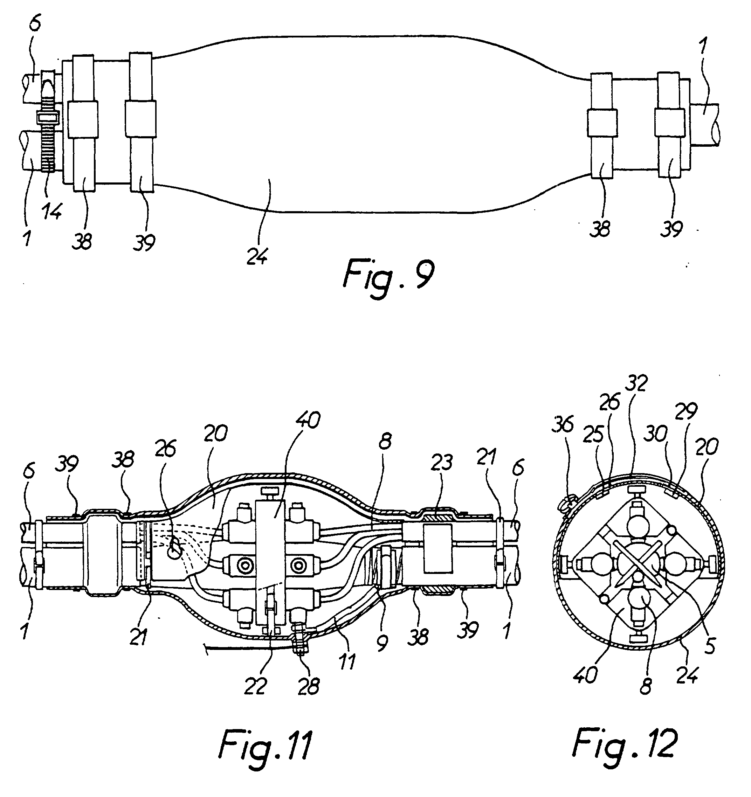

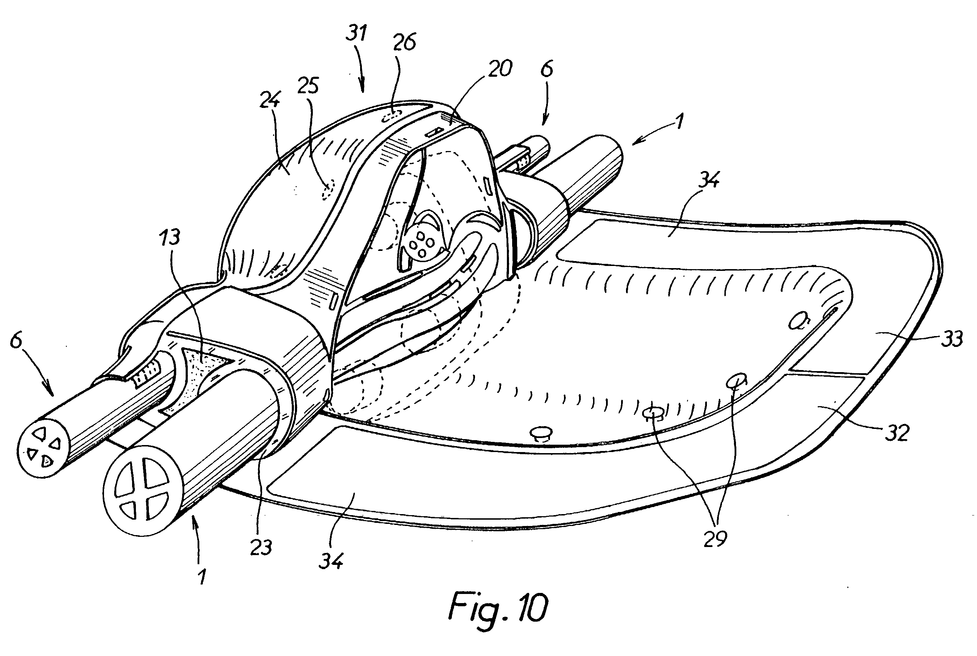

Après un compactage avec la main du mastic, à travers l'enveloppe souple 24, on effectue un encliquetage de trous de rabats 35 sur des inserts 36 de l'enveloppe 24 (figure 8). Ensuite, on pose des colliers 37 en matière plastique dans les inserts 36. Puis on pose des colliers 38 et 39 en métal inoxydable sur le creux de l'enveloppe et au bord de l'enveloppe (figure 9) dans les gorges prévues à cet effet. Ces colliers enserrent le mastic 23 dans des poches.

Les figures 10, 11 et 12 représentent une variante du dispositif présenté en figures 1 et 2, adaptée au raccordement d'un ou de deux câbles; dérivés 6 sur un câble principal 1. Dans l'exemple représenté, deux câbles dérivés 6 sont raccordés.

Dans ces figures, on retrouve les mêmes éléments que dans les figures 1 et 2, l'enveloppe souple étant cependant plus longue pour effectuer un tour plus grand, mais moins large. En effet, un seul connecteur de câble 40 remplace les connecteurs de câbles séparés 15 à 18 des figures précédentes et toutes les connexions sont ici positionnées en parallèle.

Le dispositif présenté en figures 10 à 12 se positionne de la même manière que présentée ci-dessus en regard des figures 3 à 9.

Selon des variantes, les attaches, inserts et boutons sont remplacés par d'autres types d'attaches connus de l'homme du métier, comme par exemple des boutons pression, des bandes connues sous le nom commercial de " VELCRO ", des bandes adhésives, des crochets ou des rivets.

Selon une variante non représentée, le support 20 est soit "clippé" sur les zones de raccordement en ouvrant une fente qu'elle comporte et en utilisant l'élasticité du matériau qui compose ce support, soit rendu solidaire de la zone de raccordement par des sangles ou colliers.

On note que l'invention s'applique aussi bien aux jonctions simples entre deux câbles qu'aux jonctions plus complexes décrites ci-dessus. De plus l'invention s'applique aussi bien aux jonctions aériennes qu'aux jonctions souterraines, aéro-souterraines ou sous-marines.

## Revendications

1. Dispositif de protection de raccordement d'extrémités de câbles comportant un support rigide, (20) relié mécaniquement à chacun des câbles, (1,6), une enveloppe souple (24) s'enroulant autour des extrémités de câbles et un joint d'étanchéité sur lequel s'applique l'enveloppe souple, et adapté à rendre étanche le dispositif autour des extrémités de câbles, **caractérisé en ce que** le support rigide est une coque (20) centrée sur la zone de raccordement des câbles (1,6) et qui couvre moins d'un tiers de chacun des angles solides entourant chacune des extrémités de câbles et **en ce que** ladite coque porte des moyens de liaison (30) adaptés chacun à être reliés rapidement à une partie prédéterminée de l'enveloppe souple (24).

2. Dispositif selon la revendication 1 **caractérisé en ce que** la coque (20) possède une résistance à la flexion sensiblement égale à celle de chaque groupe de câbles raccordés (1,6) présents à une extrémité du dispositif.

3. Dispositif selon la revendication 2 **caractérisé en ce que** la coque (20) est constituée d'une matière thermoplastique.

4. Dispositif selon l'une quelconque des revendications 1 à 3, **caractérisé en ce qu'**une extrémité de la coque (20) est reliée à au moins deux câbles (1,6) et **en ce qu'**elle comporte une entretoise (13), positionnée entre lesdits câbles.

5. Dispositif selon la revendication 1 **caractérisé en ce que** l'enveloppe souple (24) comporte un tissu interne métallique.

6. Dispositif selon la revendication 5 **caractérisé en ce que** ledit tissu métallique est relié en un point de mise à la terre (28).

7. Dispositif selon la revendication 1 **caractérisé en ce que** le joint d'étanchéité (32,33) est constitué d'une matière pâteuse protégée avant l'étanchéification du dispositif par un film amovible.

8. Dispositif selon les revendications 1 et 7 **caractérisé en ce que** le joint d'étanchéité (32,33) s'étend le long de l'enveloppe souple (24) entre deux extrémités du support qui sont chacune reliées à au moins un câble.

9. Dispositif selon les revendications 7 et 8 **caractérisé en ce que** le joint d'étanchéité (32,33) comporte un mastic butyle.

## Claims

1. Device for protecting a joint between the ends of cables, comprising a rigid support (20) mechanically connected to each of the cables (1, 6), a flexible jacket (24) wrapping around the ends of cables and a seal onto which the flexible jacket is applied, and suitable for sealing the device around the ends of cables, **characterized in that** the rigid support is a shell (20) which is centred on the region where the cables (1, 6) are joined and which covers less than one third of each of the solid angles surrounding each of the ends of the cables and **in that** the said shell carries connection means (30) each suitable for being rapidly connected to a predetermined part of the flexible jacket (24).

2. Device according to claim 1, **characterized in that** the shell (20) has a flexural strength substantially equal to that of each group of joined cables (1, 6) which are present at one end of the device.

3. Device according to claim 2, **characterized in that** the shell (20) is made of a thermoplastic.

4. Device according to any one of claims 1 to 3, **characterized in that** one end of the shell (20) is connected to at least two cables (1, 6) and **in that** it includes a spacer (13) positioned between the said cables.

5. Device according to claim 1, **characterized in that** the flexible jacket (24) includes an internal metal fabric.

6. Device according to claim 5, **characterized in that** the said metal fabric is connected at an earthing point (28).

7. Device according to claim 1, **characterized in that** the seal (32, 33) consists of a pasty material protected by a removable film before the device is sealed.

8. Device according to claims 1 and 7, **characterized in that** the seal (32, 33) extends along the flexible jacket (24) between two ends of the support which are each connected to at least one cable.

9. Device according to claims 7 and 8, **characterized in that** the seal (32, 33) comprises a butyl mastic.

## Patentansprüche

1. Schutzvorrichtung für die Verbindung von Kabelenden, die aufweist einen steifen Träger (20), der mechanisch mit jedem der Kabel (1,6) verbunden ist, eine weiche Hülle (24), die sich um die Endbereiche der Kabel rollt und ein Dichtungsmittel, auf dem die weiche Hülle aufliegt und das geeignet ist, die Vorrichtung um die Endbereiche der Kabel abzudichten, **dadurch gekennzeichnet, dass** der steife Träger ein Schalenteil (20) ist, das zur Verbindungszone der Kabel (1,6) zentriert ist und das weniger als ein Drittel der Umfangswinkel einnimmt, die jeweils die Endbereiche der Kabel umlaufen, und dass dieses Schalenteil Verbindungsmittel (30) trägt, die jeweils so ausgebildet sind, dass sie schnell mit einem vorbestimmten Bereich der weichen Hülle (24) verbunden werden können.

2. Vorrichtung nach Anspruch 1, **dadurch gekennzeichnet, dass** das Schalenteil (20) einen Biegewiederstand aufweist, der im Wesentlichen demjenigen jeder Gruppe von verbundenen Kabeln (1,6) entspricht, die an einem Endbereich der Vorrichtung vorhanden sind.

3. Vorrichtung nach Anspruch 2, **dadurch gekennzeichnet, dass** das Schalenteil (20) aus einem thermoplastischen Material gebildet ist.

4. Vorrichtung nach einem der Ansprüche 1 bis 3, **dadurch gekennzeichnet, dass** ein Endbereich des Schalenteils (20) mit mindestens zwei Kabeln (1,6) verbunden ist, und dass es ein Zwischenstück (13) aufweist, das sich zwischen diesen Kabeln befindet.

5. Vorrichtung nach Anspruch 1, **dadurch gekennzeichnet, dass** die weiche Hülle ein internes Metallgewebe aufweist.

6. Vorrichtung nach Anspruch 5, **dadurch gekennzeichnet, dass** das Metallgewebe mit einem Erdungspunkt (28) verbunden ist.

7. Vorrichtung nach Anspruch 1, **dadurch gekennzeichnet, dass** das Dichtungsmittel (32, 33) gebildet ist durch eine pastöse Masse, die vor der Abdichtung der Vorrichtung durch einen entfernbaren Film geschützt ist.

8. Vorrichtung nach einem der Ansprüche 1 bis 7, **dadurch gekennzeichnet, dass** das Dichtungsmittel (32, 33) sich entlang der weichen Hülle (24) zwischen zwei Endbereichen des Trägers erstreckt, die jeweils mit mindestens einem Kabel verbunden sind.

9. Vorrichtung nach den Ansprüchen 7 und 8, **dadurch gekennzeichnet, dass** das Dichtungsmittel (32, 33) eine Butylmastix aufweist.
